(19) Europäisches Patentamt
European Patent Office
Office européen des brevets

(11) EP 2 905 987 A1

(12) EUROPEAN PATENT APPLICATION
published in accordance with Art. 153(4) EPC

(43) Date of publication:
12.08.2015 Bulletin 2015/33

(51) Int Cl.:
H04W 24/10 (2009.01)

(21) Application number: 12887073.0

(22) Date of filing: 24.10.2012

(86) International application number:
PCT/CN2012/083418

(87) International publication number:
WO 2014/063314 (01.05.2014 Gazette 2014/18)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Huawei Technologies Co., Ltd.
Longgang District
Shenzhen, Guangdong 518129 (CN)

(72) Inventors:
• ZHANG, Peng
Shenzhen
Guangdong 518129 (CN)
• WANG, Zongjie
Shenzhen
Guangdong 518129 (CN)

(74) Representative: Maiwald Patentanwalts GmbH
Elisenhof
Elisenstrasse 3
80335 München (DE)

(54) METHOD AND APPARATUS FOR CONTROLLING SIGNAL CONNECTION BETWEEN USER EQUIPMENT AND CELL

(57) The present invention provides a method and an apparatus for controlling signal contact between a user equipment and a cell, where the method includes: receiving a measurement reporting event sent by the user equipment, and recording an extended active set according to the measurement reporting event, where the extended active set is used to store a correspondence between the user equipment and the cell, and the cell is a cell that is detected by the user equipment but has not been added to an active set of the user equipment; and controlling signal contact between the user equipment and the cell according to the extended active set. The present invention implements control of signal contact between a user equipment and a cell before the cell is added to an active set of the user equipment.

FIG. 1

EP 2 905 987 A1

**Description**

**TECHNICAL FIELD**

The present invention relates to communications technologies, and in particular, to a method and an apparatus for controlling signal contact between a user equipment and a cell.

**BACKGROUND**

In communications, there are multiple networking manners, for example, in a Hetnet (Heterogeneous) networking manner in a Wideband Code Division Multiple Access (Wideband CDMA, WCDMA for short) system, a macro cell (Macro) and a micro cell (Pico) are used for networking, so as to reduce networking costs. However, downlink transmit power of the Macro and that of the Pico are different, so that this kind of networking manner may cause an uplink-downlink imbalance phenomenon and bring interference between a user equipment (User Equipment, UE for short) and a cell. Specifically, assume that there are two neighboring cells which are a Macro and a Pico, and a UE is located at a location between these two cells; an uplink balance point is a location at which uplink power received by the two cells from the UE is the same, and a downlink balance point is a location at which downlink power received by the UE from the two cells is the same. If transmit power of the two cells is the same, and only a path loss is considered, the uplink and downlink balance points coincide; if transmit power of the two cells is different, the uplink and downlink balance points do not coincide, and this phenomenon that the uplink and downlink balance points do not coincide is called an uplink-downlink imbalance phenomenon. The uplink balance point is closer to the Macro, and the downlink balance point is closer to the Pico.

This kind of uplink-downlink imbalance phenomenon brings interference between the UE and the cell, such as the Pico. In order to describe this interference problem more clearly, the concept of an active set is first described: a cell belonging to an active set of a UE can detect whether transmit power of the UE is too high, and can send control signaling to the UE when the transmit power of the UE is too high, to reduce the transmit power of the UE, so as to prevent the UE from causing interference to the cell. A manner for a cell to be added to or to be removed from an active set of a UE is that, the UE detects a measurement value of a primary common pilot channel (Primary Common Pilot Channel, P-CPICH for short) of the UE; when the measurement value meets a preset threshold condition, the UE sends a 1A/1B measurement reporting event to a radio network controller (Radio Network Controller, RNC for short) at a network side; and the RNC adds the cell to the active set of the UE according to the 1A event (in this case, the power value is relatively large), and removes the cell from the active set of the UE according to the 1B event (in this case, the power value is relatively small).

The foregoing interference between the UE and the Pico is as follows: in an area between the uplink balance point and the downlink balance point, a path loss between the UE and the Pico is smaller than a path loss between the UE and the Macro; therefore, a signal sent by the UE to the Macro can be received by the Pico, that is, the Pico encounters interference from the UE. However, in this area, downlink power of the Pico received by the UE is far smaller than received downlink power of the Macro, that is, the downlink power of the Pico received by the UE is very small and cannot reach a reporting condition of the foregoing 1A event; therefore, the Pico cannot be added to the active set of the UE, and then the Pico cannot determine a UE from which the interference comes, and cannot control interference of the UE in a manner of sending control signaling, so that interference from a UE to a cell cannot be solved, that is, the UE may cause interference to the Pico. Signal contact exists between the UE and the Pico; however, in the foregoing area formed because of the uplink-downlink imbalance phenomenon, the UE cannot detect the Pico (a reporting condition of the 1 A event is not reached), and the Pico cannot detect the UE (the Pico has not been added to the active set of the UE) either, so that the interference between the UE and the Pico cannot be controlled.

In addition, in the foregoing area formed because of the uplink-downlink imbalance phenomenon, that the UE and the Pico cannot detect each other may further have the following disadvantages: it can be learned from the foregoing description that, in the area, signal contact exists between the UE and the Pico, and this kind of signal contact is that, when a resource of the Macro is limited for a short time, for example, when a data signal cannot be sent, the Pico may establish a downlink communication connection with a UE in the foregoing area formed because of the uplink-downlink imbalance phenomenon, so as to improve downlink performance. However, at present, a UE can only use 1A event reporting to let a network side know that the UE can establish a downlink communication with the Pico; therefore, in the foregoing area formed because of the uplink-downlink imbalance phenomenon, the network side does not know that the UE can establish a downlink communication with the Pico, cannot learn UEs that have signal contact with Picos, and cannot learn Picos that can be used to improve downlink performance of UEs, thereby, improvement of downlink communication performance of a UE is affected.

In conclusion, in an area between an uplink balance point and a downlink balance point formed because of an uplink-downlink imbalance phenomenon, a Pico has not been added to an active set of a UE, but signal contact exists between the UE and the Pico, and the two parties cannot detect each other. A correspondence between this kind of UE and Pico that have signal contact cannot be learned, which further causes a problem that signal interference brought about by this kind of signal contact cannot be controlled, and communication performance cannot be improved by using this kind of signal contact.

**SUMMARY**

The present invention provides a method and an apparatus for controlling signal contact between a user equipment and a cell, so as to control signal contact between a user equipment and a cell before the cell is added to an active set of the user equipment.

A first aspect of the present invention provides a method for controlling signal contact between a user equipment and a cell, including:

receiving a measurement reporting event sent by the user equipment;

recording an extended active set according to the measurement reporting event, where the extended active set is used to store a correspondence between the user equipment and the cell, and the cell is a cell that is detected by the user equipment but has not been added to an active set of the user equipment; and

controlling the signal contact between the user equipment and the cell according to the correspondence in the extended active set.

With reference to the first aspect, in a first possible implementation manner, the measurement reporting event includes: an indication that the cell is to be added to the active set, an indication that the cell is to be removed from the active set, an indication that the cell is to be added to the extended active set, and an indication that the cell is to be removed from the extended active set.

With reference to the first possible implementation manner of the first aspect, in a second possible implementation manner, the indication that the cell is to be added to the extended active set or the indication that the cell is to be removed from the extended active set is sent by the user equipment when the user equipment measures measurement values of a primary common pilot channel P-CPICH and a secondary channel of the cell and when the measurement values meet a preset threshold condition.

With reference to the first possible implementation manner of the first aspect, in a third possible implementation manner, the recording an extended active set according to the measurement reporting event includes: adding the correspondence between the user equipment and the cell to or deleting the correspondence between the user equipment and the cell from the extended active set according to any one item or a combination of at least any two items in the measurement reporting event.

With reference to the third possible implementation manner of the first aspect, in a fourth possible implementation manner, the adding the correspondence between the user equipment and the cell to or deleting the correspondence between the user equipment and the cell from the extended active set according to any one item or a combination of at least any two items in the measurement reporting event includes: if the indication, sent by the user equipment, that the cell is to be added to the extended active set is received, adding the correspondence between the user equipment and the cell to the extended active set; and if the indication, sent by the user equipment, that the cell is to be removed from the extended active set is further received after the indication that the cell is to be added to the extended active set is received, deleting the correspondence between the user equipment and the cell from the extended active set.

With reference to the fourth possible implementation manner of the first aspect, in a fifth possible implementation manner, after the indication that the cell is to be added to the extended active set is received, the method further includes: if the indication, sent by the user equipment, that the cell is to be added to the active set is received, deleting the correspondence between the user equipment and the cell from the extended active set.

With reference to the third possible implementation manner of the first aspect, in a sixth possible implementation manner, the adding the correspondence between the user equipment and the cell to or deleting the correspondence between the user equipment and the cell from the extended active set according to any one item or a combination of at least any two items in the measurement reporting event includes: if the indication, sent by the user equipment, that the cell is to be removed from the active set is received, adding the correspondence between the user equipment and the cell to the extended active set; and if the indication, sent by the user equipment, that the cell is to be added to the active set is further received after the indication that the cell is to be removed from the active set is received, deleting the correspondence between the user equipment and the cell from the extended active set.

With reference to the first aspect, or any one of the first possible implementation manner to the sixth possible implementation manner of the first aspect, in a seventh possible implementation manner, the recording an extended active set includes: recording in a manner of a table that is in a matrix format, where any table cell element in the table corresponds to the user equipment and the cell separately, and the table cell element represents, by using a preset identifier, that the user equipment corresponds to the cell; or separately recording a correspondence between each user equipment and at least one cell, where all the at least one cell correspond/corresponds to the user equipment; or separately recording a correspondence between each cell and at least one user equipment, where all the at least one user equipment correspond/corresponds to the cell.

With reference to the first aspect, or any one of the first possible implementation manner to the seventh possible implementation manner of the first aspect, in an eighth possible implementation manner, the controlling the signal contact between the user equipment and the cell includes: when it is learned that a target cell in the cell encounters interference, querying the extended active set to obtain a user equipment corresponding to the target cell; and controlling interference from the user equipment to the target cell.

With reference to the eighth possible implementation manner of the first aspect, in a ninth possible implementation manner, the controlling interference from the user equipment to the target cell includes: sending, to the user equipment, control signaling that is used to reduce transmit power of the user equipment, so that the user equipment reduces the transmit power of the user equipment according to the control signaling.

With reference to the first aspect, or any one of the first possible implementation manner to the seventh possible implementation manner of the first aspect, in a tenth possible implementation manner, the controlling the signal contact between the user equipment and the cell includes: establishing a communication connection between the cell and the user equipment according to the extended active set.

A second aspect of the present invention provides a method for controlling signal contact between a user equipment and a cell, including:

measuring, by the user equipment, measurement values of a primary common pilot channel P-CPICH and a secondary channel of the cell, where the cell is a cell that has not been added to an active set of the user equipment; and sending, by the user equipment when the measurement values meet a preset threshold condition, a measurement reporting event to a radio network controller, so that the radio network controller records an extended active set according to the measurement reporting event, where the extended active set is used to store a correspondence between the user equipment and the cell, and the cell is a cell that is detected by the user equipment but has not been added to the active set of the user equipment; and controlling the signal contact between the user equipment and the cell according to the correspondence in the extended active set.

With reference to the second aspect, in a first possible implementation manner, the sending, by the user equipment when the measurement values meet a preset threshold condition, a measurement reporting event to a radio network controller, so that the radio network controller records an extended active set according to the measurement reporting event includes: when the measurement values meet a preset threshold condition corresponding to an event of an indication that the cell is to be added to the extended active set, which indicates that the cell is detected by the user equipment, sending, by the user equipment, a measurement reporting event to the radio network controller, where the measurement reporting event is the indication that the cell is to be added to the extended active set, so that the radio network controller adds the correspondence between the user equipment and the cell to the extended active set according to the measurement reporting event; and when the measurement values meet a preset threshold condition corresponding to an event of an indication that the cell is to be removed from the extended active set, which indicates that the cell is not detected by the user equipment, sending, by the user equipment, a measurement reporting event to the radio network controller, where the measurement reporting event is the indication that the cell is to be removed from the extended active set, so that the radio network controller deletes the correspondence between the user equipment and the cell from the extended active set according to the measurement reporting event.

With reference to the second aspect, or the first possible implementation manner of the second aspect, in a second possible implementation manner, the secondary channel includes at least one of a synchronization channel, a secondary pilot channel, and an additional pilot channel.

With reference to the second aspect, the first possible implementation manner of the second aspect, or the second possible implementation manner of the second aspect, in a third possible implementation manner, the measurement values include: a path loss, received signal code power RSCP, or received signal code power/total received power Ec/No.

**[0023]** With reference to the second aspect, the first possible implementation manner of the second aspect, the second possible implementation manner of the second aspect, or the third possible implementation manner of the second aspect, in a fourth possible implementation manner, after the sending a measurement reporting event to the radio network controller, the method further includes: receiving, by the user equipment, control signaling sent by the network controller, and reducing its own transmit power according to the control signaling.

A third aspect of the present invention provides a radio network controller, including:

an extended active set maintaining unit, configured to receive a measurement reporting event sent by a user equipment, and record an extended active set according to the measurement reporting event, where the extended active set is used to store a correspondence between the user equipment and a cell, and the cell is a cell that is detected by the user equipment but has not been added to an active set of the user equipment; and

a control unit, configured to control signal contact between the user equipment and the cell according to the correspondence in the extended active set.

With reference to the third aspect, in a first possible implementation manner, the measurement reporting event includes: an indication that the cell is to be added to the active set, an indication that the cell is to be removed from the active set, an indication that the cell is to be added to the extended active set, and an indication that the cell is to be removed from the extended active set.

With reference to the first possible implementation manner of the third aspect, in a second possible implementation manner, the extended active set maintaining unit is specifically configured to add the correspondence between the user equipment and the cell to or delete the correspondence between the user equipment and the cell from the extended active set according to any one item or a combination of at least any two items in the measurement reporting event.

With reference to the second possible implementation manner of the third aspect, in a third possible implementation manner, the extended active set maintaining unit is specifically configured to, when the indication, sent by the user equipment, that the cell is to be added to the extended active set is received, add the correspondence between the user equipment and the cell to the extended active set; and is further configured to, when the indication, sent by the user equipment, that the cell is to be removed from the extended active set is received after the indication that the cell is to be added to the extended active set is received, delete the correspondence between the user equipment and the cell from the extended active set.

With reference to the second possible implementation manner of the third aspect, in a fourth possible implementation manner, the extended active set maintaining unit is specifically configured to, when the indication, sent by the user equipment, that the cell is to be added to the active set is further received after the indication that the cell is to be added to the extended active set is received, delete the correspondence between the user equipment and the cell from the extended active set.

With reference to the second possible implementation manner of the third aspect, in a fifth possible implementation manner, the extended active set maintaining unit is specifically configured to, when the indication, sent by the user equipment, that the cell is to be removed from the active set is received, add the correspondence between the user equipment and the cell to the extended active set; and is further configured to, when the indication, sent by the user equipment, that the cell is to be added to the active set is further received after the indication that the cell is to be removed from the active set is received, delete the correspondence between the user equipment and the cell from the extended active set.

With reference to a second possible implementation manner of the third aspect, in a sixth possible implementation manner, the extended active set maintaining unit is specifically configured to record in a manner of a table that is in a matrix format, where any table cell element in the table corresponds to the user equipment and the cell separately, and the table cell element represents, by using a preset identifier, that the user equipment corresponds to the cell; or separately record a correspondence between each user equipment and at least one cell, where all the at least one cell correspond/corresponds to the user equipment; or separately record a correspondence between each cell and at least one user equipment, where all the at least one user equipment correspond/corresponds to the cell.

With reference to the third aspect, or any one of the first possible implementation manner to the sixth possible implementation manner of the third aspect, in a seventh possible implementation manner, the control unit includes: a user equipment determining subunit, configured to, when it is learned that a target cell in the cell encounters interference, query the extended active set to obtain a user equipment corresponding to the target cell; and an interference control subunit, configured to control interference from the user equipment to the target cell.

With reference to the seventh possible implementation manner of the third aspect, in an eighth possible implementation manner, the interference control subunit is specifically configured to send, to the user equipment, control signaling that is used to instruct to reduce transmit power, so that the user equipment reduces the transmit power of the user equipment according to the control signaling.

With reference to the third aspect, or any one of the first possible implementation manner to the sixth possible implementation manner of the third aspect, in a ninth possible implementation manner, the control unit includes: a user equipment determining subunit, configured to query the extended active set to obtain the user equipment and the cell that are in the correspondence; and a downlink connection control subunit, configured to establish a communication connection between the cell and the user equipment according to the correspondence.

A fourth aspect of the present invention provides a user equipment, including:

a measuring unit, configured to measure measurement values of a primary common pilot channel P-CPICH and a secondary channel of a cell, where the cell is a cell that has not been added to an active set of the user equipment; and an event reporting unit, configured to: send a measurement reporting event to a radio network controller when the measurement values meet a preset threshold condition, so that the radio network controller records an extended active set according to the measurement reporting event; and control signal contact between the user equipment and the cell according to the extended active set.

With reference to the fourth aspect, in a first possible implementation manner, the event reporting unit includes: a first reporting subunit, configured to, when the measurement values meet a preset threshold condition corresponding to an event of an indication that the cell is to be added to the extended active set, which indicates that the cell is detected by the user equipment, send, by the user equipment, a measurement reporting event to the radio network controller, where the measurement reporting event is the indication that the cell is to be added to the extended active set, so that the radio network controller adds a correspondence between the user equipment and the cell to the extended active set according to the measurement reporting event; and a second reporting subunit, configured to, when the measurement values meet a preset threshold condition corresponding to an event of an indication that the cell is to be removed from the extended active set, which indicates that the cell is not detected by the user equipment, send, by the user equipment, a measurement reporting event to the radio network controller, where the measurement reporting event is the indication that the cell is to be removed from the extended active set, so that the radio network controller deletes the correspondence between the user equipment and the cell from the extended active set according to the measurement reporting event.

A fifth aspect of the present invention provides a radio network controller, including: a memory and a processor, where

the memory is configured to store an extended active set, where the extended active set is used to store a correspondence between the user equipment and a cell, and the cell is a cell that is detected by the user equipment but has not been added to an active set of the user equipment; and

the processor is configured to receive a measurement reporting event sent by the user equipment, and record the extended active set according to the measurement reporting event; and is configured to control signal contact between the user equipment and the cell according to the correspondence in the extended active set.

With reference to the fifth aspect, in a first possible implementation manner, the measurement reporting event includes: an indication that the cell is to be added to the active set, an indication that the cell is to be removed from the active set, an indication that the cell is to be added to the extended active set, and an indication that the cell is to be removed from the extended active set.

With reference to the first possible implementation manner of the fifth aspect, in a second possible implementation manner, the processor is specifically configured to add the correspondence between the user equipment and the cell to or delete the correspondence between the user equipment and the cell from the extended active set according to any one item or a combination of at least any two items in the measurement reporting event.

With reference to the second possible implementation manner of the fifth aspect, in a third possible implementation manner, the processor is specifically configured to, when the indication, sent by the user equipment, that the cell is to be added to the extended active set is received, add the correspondence between the user equipment and the cell to the extended active set; and is further configured to, when the indication, sent by the user equipment, that the cell is to be removed from the extended active set is received after the indication that the cell is to be added to the extended active set is received, delete the correspondence between the user equipment and the cell from the extended active set.

With reference to the second possible implementation manner of the fifth aspect, in a fourth possible implementation manner, the processor is specifically configured to, when the indication, sent by the user equipment, that the cell is to be added to the active set is further received after the indication that the cell is to be added to the extended active set is received, delete the correspondence between the user equipment and the cell from the extended active set.

With reference to the second possible implementation manner of the fifth aspect, in a fifth possible implementation manner, the processor is specifically configured to, when the indication, sent by the user equipment, that the cell is to be removed from the active set is received, add the correspondence between the user equipment and the cell to the extended active set; and is further configured to, when the indication, sent by the user equipment, that the cell is to be added to the active set is further received after the indication that the cell is to be removed from the active set is received, delete the correspondence between the user equipment and the cell from the extended active set.

With reference to a second possible implementation manner of the fifth aspect, in a sixth possible implementation manner, the processor is specifically configured to record in a manner of a table that is in a matrix format, where any table cell element in the table corresponds to the user equipment and the cell separately, and the table cell element represents, by using a preset identifier, that the user equipment corresponds to the cell; or separately record a correspondence between each user equipment and at least one cell, where all the at least one cell correspond/corresponds to the user equipment; or separately record a correspondence between each cell and at least one user equipment, where all the at least one user equipment correspond/corresponds to the cell.

With reference to the fifth aspect, or any one of the first possible implementation manner to the sixth possible implementation manner of the fifth aspect, in a seventh possible implementation manner, the process is further configured to: when it is learned that a target cell in the cell encounters interference, query the extended active set to obtain a user equipment corresponding to the target cell; and control interference from the user equipment to the target cell.

With reference to the seventh possible implementation manner of the fifth aspect, in an eighth possible implementation manner, the processor is specifically configured to send, to the user equipment, control signaling that is used to instruct to reduce transmit power, so that the user equipment reduces the transmit power of the user equipment according to the control signaling.

A sixth aspect of the present invention provides a user equipment, including: a memory and a processor, where the memory is configured to store measurement values, which are obtained through measurement, of a primary common pilot channel P-CPICH and a secondary channel of a cell, where the cell is a cell that has not been added to an active set of the user equipment; and

the processor is configured to: send a measurement reporting event to a radio network controller when the measurement values meet a preset threshold condition, so that the radio network controller records an extended active set according to the measurement reporting event; and control signal contact between the user equipment and the cell according to the extended active set.

With reference to the sixth aspect, in a first possible implementation manner, the processor is specifically configured to, when the measurement values meet a preset threshold condition corresponding to an event of an indication that the cell is to be added to the extended active set, which indicates that the cell is detected by the user equipment, send, by the user equipment, a measurement reporting event to the radio network controller, where the measurement reporting event is the indication that the cell is to be added to the extended active set, so that the radio network controller adds the correspondence between the user equipment and the cell to the extended active set according to the measurement reporting event; and is configured to, when the measurement values meet a preset threshold condition corresponding to an event of an indication that the cell is to be removed from the extended active set, which indicates that the cell is not detected by the user equipment, send, by the user equipment, a measurement reporting event to the radio network controller, where the measurement reporting event is the indication that the cell is to be removed from the extended active set, so that the radio network controller deletes the correspondence between the user equipment and the cell from the extended active set according to the measurement reporting event.

Technical effects of a method and an apparatus for controlling signal contact between a user equipment and a cell according to the present invention are that: a radio network controller records an extended active set according to a measurement reporting event sent by a user equipment, and records a correspondence between the user equipment and a cell, where the cell is detected by the user equipment but has not been added to an active set of the user equipment. In this way, before the cell is added to the active set of the user equipment, the radio network controller at a network side learns the user equipment and the cell that are in signal contact, thereby controlling the signal contact between the user equipment and the cell according to the correspondence in the extended active set.

## BRIEF DESCRIPTION OF DRAWINGS

FIG. 1 is a schematic flowchart of an embodiment of a method for controlling signal contact between a user equipment and a cell according to the present invention;

FIG. 2 is a schematic flowchart of another embodiment of a method for controlling signal contact between a user equipment and a cell according to the present invention;

FIG. 3 is a schematic flowchart of still another embodiment of a method for controlling signal contact between a user equipment and a cell according to the present invention;

FIG. 4 shows scenario one of a list change in still another embodiment of a method for controlling signal contact between a user equipment and a cell according to the present invention;

FIG. 5 shows scenario two of a list change in still another embodiment of a method for controlling signal contact between a user equipment and a cell according to the present invention;

FIG. 6 shows scenario three of a list change in still another embodiment of a method for controlling signal contact between a user equipment and a cell according to the present invention;

FIG. 7 shows scenario four of a list change in still another embodiment of a method for controlling signal contact between a user equipment and a cell according to the present invention;

FIG. 8 shows scenario five of a list change in still another embodiment of a method for controlling signal contact between a user equipment and a cell according to the present invention;

FIG. 9 is a schematic structural diagram of an embodiment of a radio network controller RNC according to the present invention;

FIG. 10 is a schematic structural diagram of another embodiment of a radio network controller RNC according to the present invention;

FIG. 11 is a schematic structural diagram of still another embodiment of a radio network controller RNC according to the present invention;

FIG. 12 is a schematic structural diagram of an embodiment of a user equipment according to the present invention;

FIG. 13 is a schematic structural diagram of another embodiment of a user equipment according to the present invention;

FIG. 14 is a schematic structural diagram of an entity of an embodiment of a radio network controller according to the present invention; and

FIG. 15 is a schematic structural diagram of an entity of an embodiment of a user equipment according to the present invention.

## DESCRIPTION OF EMBODIMENTS

In order to make descriptions of a method for controlling signal contact between a user equipment and a cell according to embodiments of the present invention more clearly and easy to understand, some concepts that are involved in the embodiments of the present invention are first described:

**Active set**: The active set is a set of cells that serve a UE. When a cell is added to an active set of a UE, the cell (which is actually a base station of the cell) can detect whether transmit power of the UE is too high; and when the transmit power of the UE is too high, the cell may send control signaling to the UE to reduce the transmit power of the UE, so as to achieve a purpose of reducing interference from the UE to the cell.

**1A event**: A cell is added to an active set of a UE by using a 1A event, where the 1A event may be called "an indication that the cell is to be added to the active set". Specifically, the UE may measure a measurement value of a P-CPICH of the cell, where the measurement value may be a path loss, RSCP, Ec/No, or the like. If the measurement value meets a preset threshold condition corresponding to the 1A event, the UE reports the 1A event to an RNC at a network side. Upon receiving the 1A event reported by the UE, the RNC may decide, according to reporting of the 1A event, to add the cell to the active set of the UE, that is, to establish a communication link between the cell and the UE, and then the cell can send control signaling to the UE.

In specific implementation, an activation condition of the 1A event may be expressed in multiple formulas, such as the following optional condition expression formulas:

If the measurement value of the P-CPICH of the cell measured by the UE is the path loss, the activation condition is expressed as:

$$10 \cdot LogM_{New} + CIO_{New} \leq W \cdot 10 \cdot Log\left(1/\sum_{i=1}^{N_A}(1/M_i)\right) + (1-W) \cdot 10 \cdot LogM_{Best} + (R_{1a} - H_{1a}/2),$$

$$\ldots\ldots (1)$$

In the formula (1), $M_{New}$ is the path loss, and path loss = (P-CPICH transmit power) - (P-CPICH RSCP), where RSCP is received signal code power (received signal code power); $CIO_{New}$ is an offset value; W is a parameter delivered by a UTRAN at the network side to the UE; $N_A$ is the number of other cells that are in the active set and may affect a reporting range; $M_i$ is a measurement value of a P-CPICH of another cell that is in the active set and may affect the reporting range; the reporting range is a location range of reporting the event 1A; $M_{Best}$ is a measurement value of a cell with a smallest path loss, that is, the smallest path loss; $R_{1a}$ is a reporting range constant; and $H_{1a}$ is a hysteresis parameter.

If the measurement value of the P-CPICH of the cell measured by the UE is the Ec/No or the RSCP of the P-CPICH, the activation condition is expressed as:

$$10 \cdot LogM_{New} + CIO_{New} \geq W \cdot 10 \cdot Log\left(\sum_{i=1}^{N_A} M_i\right) + (1-W) \cdot 10 \cdot LogM_{Best} - (R_{1a} - H_{1a}/2),$$

$$\ldots\ldots (2)$$

In the foregoing formula (2), $M_{New}$ is the Ec/No or the RSCP of the P-CPICH, $M_{Best}$ is a measurement value of a cell with a largest Ec/N0 (or RSCP) of the P-CPICH; and meanings of other parameters are the same as those in formula (1), and details are not described herein again.

A deactivation condition of the 1A event, that is, a condition that does not trigger the UE to report the 1 A event to the RNC at the network side, is opposite to the condition formulated in the foregoing formula (1) or formula (2), for example, if the measurement value of the P-CPICH of the cell measured by the UE is the path loss, the deactivation condition of the 1A event is:

$$10 \cdot LogM_{New} + CIO_{New} > W \cdot 10 \cdot Log\left(1/\sum_{i=1}^{N_A}(1/M_i)\right) + (1-W) \cdot 10 \cdot LogM_{Best} + (R_{1a} + H_{1a}/2),$$

$$\ldots\ldots (3)$$

As in the foregoing formula (1), formula (2), or formula (3), a value after calculation by using an expression at the right side of a relational symbol (such as ">") in each formula is equivalent to the preset threshold; the measurement value is $M_{New}$ in the formulas, and the measurement value meeting the preset threshold condition corresponding to the 1A event is that after being calculated by using an expression at a left side of a relational symbol in each formula, the $M_{New}$ and the present threshold at the right side of a relational symbol meets a condition expressed by each formula.

**1B event**: A cell is removed from an active set of a UE by using a 1B event, where the 1B event may be called "an indication that the cell is to be removed from the active set". Specifically, the UE may measure a measurement value of a P-CPICH of the cell. If the measurement value meets a preset threshold condition corresponding to the 1 B event, the UE reports the 1B event to an RNC at a network side. Upon receiving the 1B event reported by the UE, the RNC may decide, according to reporting of the 1B event, to remove the cell from the active set of the UE, that is, to disconnect a communication link between the cell and the UE, and then the cell can no longer send control signaling to the UE.

In specific implementation, an activation condition of the 1B event may be expressed in multiple formulas, such as the following optional condition expression formulas:

If the measurement value of the P-CPICH of the cell measured by the UE is the path loss, the activation condition is expressed as:

$$10 \cdot LogM_{Old} + CIO_{Old} \geq W \cdot 10 \cdot Log\left(1/\sum_{i=1}^{N_A}(1/M_i)\right) + (1-W) \cdot 10 \cdot LogM_{Best} + (R_{1b} + H_{1b}/2),$$

$$\ldots\ldots (4)$$

where in the formula (4), $M_{Old}$ is a measurement value of a P-CPICH of an original cell, where the original cell is a cell that has already been added to the active set of the UE and is to be removed from the active set of the UE; and meanings of other parameters are the same as those in formula (1).

If the measurement value of the P-CPICH of the cell measured by the UE is the Ec/No or the RSCP of the P-CPICH, the activation condition is expressed as:

$$10 \cdot LogM_{Old} + CIO_{Old} \leq W \cdot 10 \cdot Log\left(\sum_{i=1}^{N_A} M_i\right) + (1-W) \cdot 10 \cdot LogM_{Best} - (R_{1b} + H_{1b}/2),$$

$$\ldots\ldots (5)$$

A deactivation condition of the 1B event, that is, a condition that does not trigger the UE to report the 1B event to the RNC at the network side, is opposite to the condition formulated in the foregoing formula (3) or formula (4), for example, if the measurement value of the P-CPICH of the cell measured by the UE is the path loss, the deactivation condition of the 1B event is:

$$10 \cdot LogM_{Old} + CIO_{Old} < W \cdot 10 \cdot Log\left(1/\sum_{i=1}^{N_A}(1/M_i)\right) + (1-W)\cdot 10 \cdot LogM_{Best} + (R_{1b} - H_{1b}/2),$$

$$\ldots\ldots (6)$$

The following e1A event and e1B event are measurement triggering events newly added to a UE in the embodiments of the present invention. A specific manner of adding the events to the UE is that, for example, an RNC sends a message to the UE to instruct the UE to execute according to configuration of the events. Differences between the e1A event and e1B event and the foregoing 1A event and 1B event lie in that, the UE measures power of a cell not only based on a P-CPICH of the cell, but also measures power of a secondary channel;; and the UE also needs to trigger the UE to report the e1A event or the e1B event to an RNC when the measured measurement values of the P-CPICH and the secondary channel of the cell meet a preset threshold condition. The following uses specific formulas as examples for description:

**e1A event**: An activation condition of the e1A event is that:

if the measurement values of the P-CPICH and the secondary channel of the cell measured by the UE are path losses, the activation condition is expressed as:

$$10 \cdot Log\left(M_{New} + E_{New}\right) + CIO_{New} \leq W \cdot 10 \cdot Log\left(1/\sum_{i=1}^{N_A}(1/M_i)\right) + (1-W)\cdot 10 \cdot LogM_{Best} + \left(R_{1a} - H_{1a}/2\right)$$

$$\ldots\ldots (7)$$

if the measurement values of the P-CPICH and the secondary channel of the cell measured by the UE are Ec/No or RSCP of the P-CPICH, the activation condition is expressed as:

$$10 \cdot Log\left(M_{New} + E_{New}\right) + CIO_{New} \geq W \cdot 10 \cdot Log\left(\sum_{i=1}^{N_A} M_i\right) + (1-W)\cdot 10 \cdot LogM_{Best} + \left(R_{1a} - H_{1a}/2\right)$$

$$\ldots\ldots (8)$$

A deactivation condition of the e1A event, that is, a condition that does not trigger the UE to report the e1A event to the RNC at the network side, is opposite to the condition formulated in the foregoing formula (7) or formula (8); if the measurement values of the P-CPICH and the secondary channel of the cell measured by the UE are the path losses, the deactivation condition of the e1A event is:

$$10 \cdot Log\left(M_{New} + E_{New}\right) + CIO_{New} > W \cdot 10 \cdot Log\left(1/\sum_{i=1}^{N_A}(1/M_i)\right) + (1-W)\cdot 10 \cdot LogM_{Best} + \left(R_{1a} - H_{1a}/2\right)$$

$$\ldots\ldots (9)$$

if the measurement values of the P-CPICH and the secondary channel of the cell measured by the UE are the Ec/No or the RSCP of the P-CPICH, the deactivation condition of the e1A event is expressed as:

$$10 \cdot Log\left(M_{New} + E_{New}\right) + CIO_{New} < W \cdot 10 \cdot Log\left(\sum_{i=1}^{N_A} M_i\right) + (1-W)\cdot 10 \cdot LogM_{Best} + \left(R_{1a} - H_{1a}/2\right)$$

$$\ldots\ldots (10)$$

In the foregoing formula (7) to formula (10), $E_{New}$ is a measurement value of a secondary channel, and meanings of other parameters are the same as those in the foregoing described formulas. The secondary channel may be a common channel, for example, including a secondary pilot channel, an additional pilot channel, a synchronization channel, or another newly added channel; and in the secondary channel, the number of measured secondary channels in the embodiments of the present invention is at least one, for example, only a secondary pilot channel is measured, or a secondary pilot channel and a synchronization channel are measured, and $E_{New}$ is the sum of measurement values of the two secondary channels. The measurement value includes, for example, a path loss, received signal code power RSCP, received signal code power/total received power Ec/No, or another power measurement parameter.

**e1B event**: An activation condition of the e1B event is that:

if the measurement values of the P-CPICH and the secondary channel of the cell measured by the UE are path losses, the activation condition is expressed as:

$$10 \cdot Log\left(M_{Old} + E_{Old}\right) + CIO_{Old} \geq W \cdot 10 \cdot Log\left(1/\sum_{i=1}^{N_A}\left(1/M_i\right)\right) + \left(1-W\right) \cdot 10 \cdot LogM_{Best} + \left(R_{1a} - H_{1a}/2\right)$$

$$\dots\dots (11)$$

if the measurement values of the P-CPICH and the secondary channel of the cell measured by the UE are Ec/No or RSCP of the P-CPICH, the activation condition is expressed as:

$$10 \cdot Log\left(M_{Old} + E_{Old}\right) + CIO_{Old} \leq W \cdot 10 \cdot Log\left(\sum_{i=1}^{N_A} M_i\right) + \left(1-W\right) \cdot 10 \cdot LogM_{Best} + \left(R_{1a} - H_{1a}/2\right)$$

$$\dots\dots (12)$$

A deactivation condition of the e1B event, that is, a condition that does not trigger the UE to report the e1B event to the RNC at the network side, is opposite to the condition formulated in the foregoing formula (11) or formula (12); if the measurement values of the P-CPICH and the secondary channel of the cell measured by the UE are the path losses, the deactivation condition of the e1B event is:

$$10 \cdot Log\left(M_{Old} + E_{Old}\right) + CIO_{Old} < W \cdot 10 \cdot Log\left(1/\sum_{i=1}^{N_A}\left(1/M_i\right)\right) + \left(1-W\right) \cdot 10 \cdot LogM_{Best} + \left(R_{1a} - H_{1a}/2\right)$$

$$\dots\dots (13)$$

if the measurement values of the P-CPICH and the secondary channel of the cell measured by the UE are the Ec/No or the RSCP of the P-CPICH, the deactivation condition of the e1B event is expressed as:

$$10 \cdot Log\left(M_{Old} + E_{Old}\right) + CIO_{Old} > W \cdot 10 \cdot Log\left(\sum_{i=1}^{N_A} M_i\right) + \left(1-W\right) \cdot 10 \cdot LogM_{Best} + \left(R_{1a} - H_{1a}/2\right)$$

$$\dots\dots (14)$$

It can be learned from the foregoing formulas of the e1A event or the e1B event, compared with the 1A event and the 1B event, these two events also support additional measurement of power of a secondary channel besides measurement of a P-CPICH of a cell, a purpose of which is to increase a probability of detecting a cell by a UE. If only the measurement manners of the 1A event and the 1B event are used, and in an uplink-downlink imbalance phenomenon, downlink power of a cell Pico received by the UE is very low in an area between an uplink balance point and a downlink balance point; if the UE only measures the P-CPICH channel of the cell, the UE is easily interfered by a noise signal,

and the like.是 否可以修改为 In an uplink-downlink imbalance phenomenon, downlink power of a cell Pico received by the UE is very low in an area between an uplink balance point and a downlink balance point, if only the measurement manners of the 1A event and the 1B event are used, and if the UE only measures the P-CPICH channel of the cell, the UE is easily interfered by a noise signal, and the like. That is, the UE cannot determine, only according to detection of power of the P-CPICH channel, that the cell is detected. By supporting additional measurement of power of a secondary channel, the embodiments of the present invention can weaken interference from another noise signal to cell detection, thereby improving a probability of detecting a cell by a UE.

The following describes functions of the foregoing e1A event or e1B event:

for the e1A event, if the measurement values of the P-CPICH and the secondary channel detected by the UE meet the foregoing activation condition of the e1A event, that is, the measurement values meet the preset threshold condition corresponding to the e1A event (where a threshold is a value obtained after calculation by using a computational formula at the right side of a relational symbol in an activation condition formula, the measurement values meeting the preset threshold condition is meeting a relationship expressed by the activation condition formula), it indicates that the UE detects existence of the cell. The UE reports the e1A event to an RNC, and the RNC records a correspondence between the cell and the UE according to the measurement reporting event, so as to represent that the UE detects the cell; and

for the e1B event, if the measurement values of the P-CPICH and the secondary channel detected by the UE meet the foregoing activation condition of the e1B event, that is, the measurement values meet the preset threshold condition corresponding to the e1B event, it indicates that the cell leaves the UE. In this case, strength of a signal received from the UE by the cell is relatively weak, and the cell cannot establish communication with the UE. The UE reports the e1B event to the RNC, and the RNC deletes the previously recorded correspondence between the cell and the UE according to the measurement reporting event, which represents that the UE cannot detect the cell.

It should be noted that, the cell measured by the UE in the foregoing e1A event or e1B event is a cell that has not been added to an active set of the UE, and the measurement of the e1A event or the e1B event is processed for a case in which the UE is located in an area between the uplink balance point and the downlink balance point. Assume that when the UE moves from a Macro to a Pico, the downlink balance point is closer to the Pico and the uplink balance point is closer to the Macro. When the UE reaches the downlink balance point and continues to move towards the Pico, the Pico generally can be added to the active set of the UE, and can control interference from the UE. When the UE does not reach the uplink balance point, a path loss between the UE and the Pico is relatively large, and generally, no interference is caused to the Pico; therefore, it is in an area between the uplink balance point and the downlink balance point in which the UE causes interference to the Pico but the Pico cannot control the interference from the UE. The UE in the embodiments of the present invention can, in this area, measures power of a cell channel according to indications of the foregoing e1A event and e1B event, and can detect existence of a cell. When a UE detects a cell, interference encountered by the cell may be caused by the UE, and the interference to the cell can be controlled subsequently.

**Extended active set**: After the UE reports the e1A event or e1B event to the RNC, an RNC side records, according to the measurement reporting event, a correspondence between the UE and a cell detected by the UE, or deletes a correspondence between the UE and a cell detected by the UE. The foregoing correspondence is stored in a form of an extended active set at the RNC side. The extended active set is used to store a correspondence between a UE and a cell, where the cell is a cell that is detected by the user equipment but has not been added to an active set of the user equipment. Correspondingly, the e1A event may be called "an indication that the cell is to be added to the extended active set" (because the RNC adds the correspondence according to the e1A event), and the e1B event may be called "an indication that the cell is to be removed from the extended active set" (because the RNC deletes the correspondence according to the e1B event).

On the basis of the description of the foregoing concepts, the following describes in detail how signal contact between a UE and a cell is controlled in the embodiments of the present invention according to a correspondence between the UE and the cell recorded in an extended active set, where the control of signal contact includes: controlling interference between the UE and the cell, enhancing downlink performance of the UE, and the like.

**Embodiment 1**

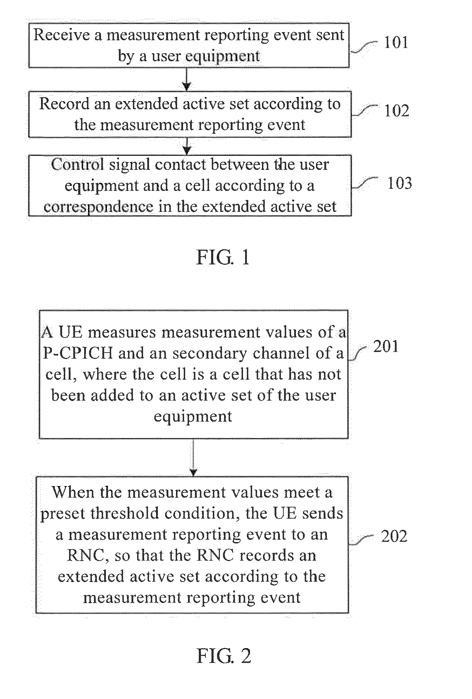

FIG. 1 is a schematic flowchart of an embodiment of a method for controlling signal contact between a user equipment and a cell according to the present invention. The method in this embodiment is executed by an RNC at a network side. As shown in FIG. 1, the method may include:

101: Receive a measurement reporting event sent by the user equipment.

The measurement reporting event includes: an indication that the cell is to be added to an active set (that is, a 1A event), an indication that the cell is to be removed from the active set (that is, a 1B event), an indication that the cell is to be added to an extended active set (that is, an e1A event), and an indication that the cell is to be removed from the extended active set (that is, an e1B event).

102: Record an extended active set according to the measurement reporting event.

The extended active set is used to store a correspondence between the user equipment and the cell, and the cell is a cell that is detected by the user equipment but has not been added to an active set of the user equipment.

In this embodiment, the extended active set is recorded according to any one item or a combination of at least any two items in the measurement reporting event.

For example, the RNC receives only the e1A event sent by the UE, the RNC adds the correspondence between the cell and the UE to the extended active set, which is used to represent that the UE detects the cell, that is, the UE may cause interference to the cell.

For another example, after receiving the 1A event, the RNC further receives the 1B event, in this case, it is also considered that the UE detects the cell, and the correspondence between the cell and the UE is added to the extended active set. In this case, it is may be considered that the extended active set is recorded according to a combination of the 1A event and the 1B event.

The recording of an extended active set includes: adding the correspondence between the user equipment and the cell to the extended active set, and deleting the correspondence between the user equipment and the cell from the extended active set.

103: Control signal contact between the user equipment and the cell according to the correspondence in the extended active set.

The controlling the signal contact includes: uplink control and downlink control, where the uplink control is to weaken contact between the UE and an interference signal of the cell, and the downlink control is to enhance contact between the cell and a data signal of the UE. This embodiment of the present invention only describes how to improve downlink performance of a UE and control interference between two parties according to a correspondence; however, in specific implementation, other problems may also be solved according to the correspondence, which is not limited in the present invention.

For example, in controlling interference between the cell and the UE, the following may be executed:

when it is learned that a target cell in the cell encounters interference, querying the extended active set to obtain a user equipment corresponding to the target cell;
where the learning that a target cell encounters interference may be that, for example, the target cell reports interference strength at its own side to the RNC, so that the RNC knows that the cell encounters interference.

The target cell in the cell refers to a cell that encounters interference and has a storage record in the extended active set of the RNC. The obtaining a user equipment corresponding to the target cell is that the user equipment and the target cell are in a correspondence, where the correspondence refers to that the target cell is detected by the UE but has not been added to an active set of the UE.

Provided that a target cell and a UE are in a correspondence, interference to the target cell is probably caused by the UE. If a cell and a UE are not in a correspondence, it is considered that interference from the UE to the cell is not large. Therefore, an interference problem of the target cell can be relieved if transmit power of all UEs corresponding to the target cell is controlled.

In this embodiment, there are various manners for the RNC to control interference from the UE. For example, the RNC may directly send control signaling to the UE to reduce transmit power of the UE; or the RNC sends scrambling code information of a UE corresponding to a target cell to the target cell, so that the target cell clears by itself interference from the UE according to the scrambling code information.

For another example, downlink performance of the UE may also be improved according to the correspondence in the extended active set. Communication connection between the cell and the user equipment is established according to the extended active set. When the cell and the user equipment communicate, downlink interference to the user equipment from a cell that has already been added to the active set of the user equipment is controlled, so as to ensure proper downlink communication between the user equipment and the cell, thereby improving downlink performance of the UE.

In the method for controlling signal contact between a user equipment and a cell according to this embodiment, an RNC records an extended active set according to a measurement reporting event of a UE, and records a correspondence between the user equipment and the cell, where the cell is detected by the user equipment but has not been added to an active set of the user equipment. In this way, before the cell is added to the active set of the user equipment, the radio network controller at a network side learns the user equipment and the cell that are in signal contact, thereby controlling the signal contact between the user equipment and the cell according to the correspondence in the extended active set.

**Embodiment 2**

FIG. 2 is a schematic flowchart of another embodiment of a method for controlling signal contact between a user equipment and a cell according to the present invention. The method in this embodiment is executed by the UE. As shown in FIG. 2, the method may include:

201: The UE measures measurement values of a primary common pilot channel P-CPICH and a secondary channel of a cell, where the cell is a cell that has not been added to an active set of the user equipment.

The secondary channel may be a common channel, for example, including a secondary pilot channel, an additional pilot channel, a synchronization channel, or another newly added channel; and in the secondary channel, the number of measured secondary channels in this embodiment of the present invention is at least one, for example, only a secondary pilot channel is measured, or a secondary pilot channel and a synchronization channel are measured, and $E_{New}$ is the sum of measurement values of the two secondary channels.

The measurement value includes, for example, a path loss, received signal code power RSCP, received signal code power/total received power Ec/No, or another power measurement parameter.

202: When the measurement values meet a preset threshold condition, the UE sends a measurement reporting event to an RNC, so that the RNC records an extended active set according to the measurement reporting event.

The measurement values meeting the preset threshold condition is that the measurement values of the P-CPICH and the secondary channel measured by the UE meet an activation condition of an e1A event or an e1B event and can trigger the UE to report the e1A event or the e1B event to the RNC.

For example, the condition in formula (7) or formula (8) is met, so that the UE reports the e1A event to the RNC; or the condition in formula (11) or formula (12) is met, so that the UE reports the e1B event to the RNC.

After the RNC records the extended active set according to the measurement reporting event, when a target cell encounters interference, a UE corresponding to the target cell can be found by searching according to the extended active set, and interference from the UE to the target cell can be controlled according to the extended active set.

It should be noted that, the UE in this embodiment further reports a 1A event and a 1B event.

**Embodiment 3**

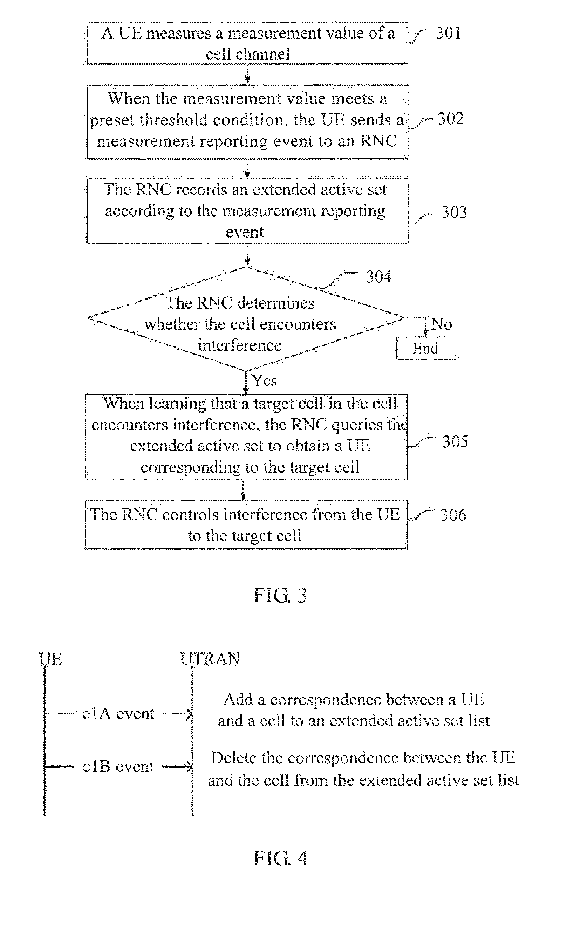

FIG. 3 is a schematic flowchart of still another embodiment of a method for controlling signal contact between a user equipment and a cell according to the present invention. Controlling interference from the UE to the cell is mainly used as an example in this embodiment to describe application of a correspondence in an extended active set. As shown in FIG. 3, the method may include:

301: The UE measures a measurement value of a cell channel.

The cell channel may include a P-CPICH and a secondary channel of the cell (which corresponds to an e1A event or an e1B event), or may also only include a P-CPICH of the cell (which corresponds to a 1A event or a 1B event).

The measurement value, for example, includes a path loss, an RSCP, or an Ec/No.

[0100]    Selection of the number of secondary channels and a type of the secondary channel is determined by an RNC. For example, the number of secondary channels may be determined according to a distance between the UE and the cell, and a larger number of secondary channels may be selected when the distance is relatively long. A type of the secondary channel may be determined according to channels that are configured at a cell side.

In addition, the foregoing number of secondary channels and the type of the secondary channel may be stipulated by a protocol and be constant, which are known to the RNC at a network side and the UE by default; or may also be adjusted and changed by the RNC, and be sent to the UE in real time after modification, and then the UE measures according to a modified number of secondary channels and a modified type of the secondary channel.

302: When the measurement value meets a preset threshold condition, the UE sends a measurement reporting event to an RNC.

The measurement reporting event includes: an indication that the cell is to be added to an active set (that is, the 1A event), an indication that the cell is to be removed from the active set (that is, the 1B event), an indication that the cell is to be added to the extended active set (that is, the e1A event), and an indication that the cell is to be removed from the extended active set (that is, the e1B event).

That when the measurement value meets a preset threshold condition, the UE sends a measurement reporting event to an RNC is that, when the measurement value in 301 meets a preset threshold condition corresponding to an event, the UE reports the corresponding event, such as the e1A event, to the RNC.

For details about sending of each of the foregoing measurement reporting events, specific reference may be made to the previous descriptions of events. The following only simply describes reporting of the e1A event and the e1B event as an example:

for example, when the measurement value meets a preset threshold condition corresponding to the e1A event (for example, the condition in formula (7) or that in formula (8) is met), it indicates that the cell is detected by the UE, and the UE reports a measurement reporting event to the RNC, where the measurement reporting event is the e1A event, so that the RNC adds a correspondence between the UE and the cell to the extended active set; and for another example, after the foregoing sending of the e1A event, the UE further acquires a measurement value that meets a preset threshold condition corresponding to the e1B event (for example, the condition in formula (11) or that in formula (12) is met), it indicates that the cell is not detected by the UE, and the UE reports a measurement reporting event to the RNC, where the measurement reporting event is the e1B event, so that the RNC deletes the previously recorded correspondence between the UE and the cell from the extended active set.

In this embodiment, the UE may also send the 1A event and the 1B event to the RNC, and in this case, the cell channel measured by the UE is the P-CPICH of the cell, which may be executed in this way in specific implementation: for the following example, assume that during a process of moving from a Micro to a Pico, the UE may separately execute measurement of channel power corresponding to the 1A event, the 1B event, the e1A event, and the e1B event at the same time, before the UE reaches an uplink balance point, it may be that all these four events do not meet a condition of triggering reporting; when locating in an area between the uplink balance point and a downlink balance point, the UE may report the e1A event to the RNC, which indicates that the UE detects the cell; and when the UE keeps moving towards the Pico after moving at the downlink balance point, downlink power of the Pico received by the UE is relatively large, which may probably trigger the UE to report the 1A event to the RNC.

303: The RNC records an extended active set according to the measurement reporting event.

The extended active set is used to store the correspondence between the UE and the cell, and the cell is a cell that is detected by the UE but has not been added to the active set of the UE.

In this embodiment, the RNC adds the correspondence between the UE and the cell to or deletes the correspondence between the UE and the cell from the extended active set according to any one item or a combination of at least any two items in the foregoing measurement reporting event. The following lists five possible implementation scenarios, and describes how the RNC records the extended active set according to the measurement reporting event in these scenarios. In the following figures, a UTRAN represents a network side, and maintenance processing of the extended active set is actually executed by the RNC at the network side.

FIG. 4 shows scenario one of a list change in still another embodiment of the method for controlling the signal contact between the user equipment and the cell according to the present invention. As shown in FIG. 4, if the UTRAN receives the e1A event (that is, Event e1A) sent by the UE, it indicates that the UE detects the cell, and the UTRAN adds the correspondence between the UE and the cell to the extended active set. After the e1A event occurs, if the UTRAN further receives the e1B event (that is, Event e1B) sent by the UE, it indicates that the UE cannot detect the cell at this moment, and the UTRAN deletes the correspondence between the UE and the cell from the extended active set.

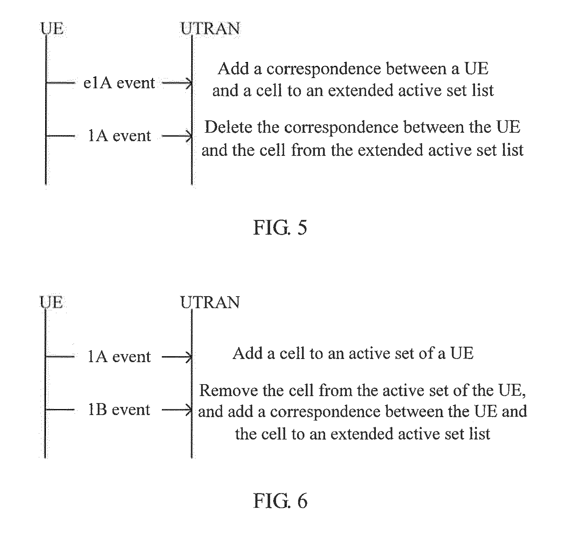

FIG. 5 shows scenario two of a list change in still another embodiment of the method for controlling the signal contact between the user equipment and the cell according to the present invention. As shown in FIG. 5, if the UTRAN receives the e1A event (that is, Event e1A) sent by the UE, it indicates that the UE detects the cell, and the UTRAN adds the correspondence between the UE and the cell to the extended active set. After the e1A event occurs, if the UTRAN further receives the 1A event (that is, Event 1A) sent by the UE, it indicates that the cell reaches a condition that the cell is to be added to the active set of the UE, and the UTRAN adds the cell to the active set of the UE, and deletes the previously recorded correspondence between the UE and the cell from the extended active set.

FIG. 6 shows scenario three of a list change in still another embodiment of the method for controlling the signal contact between the user equipment and the cell according to the present invention. As shown in FIG. 6, if the UTRAN receives the 1A event (that is, Event 1A) sent by the UE, it indicates that the UE detects the cell and the cell reaches a condition that the cell is to be added to the active set of the UE, and the UTRAN adds the cell to the active set of the UE according to the 1A event. After the 1A event occurs, if the UTRAN further receives the 1B event (that is, Event 1B) sent by the UE, it indicates that the cell does not reach the condition of to be added to the active set of the UE at this moment, and the UTRAN removes the cell from the active set of the UE, and adds the correspondence between the UE and the cell to the extended active set, and it is considered that the UE detects the cell.

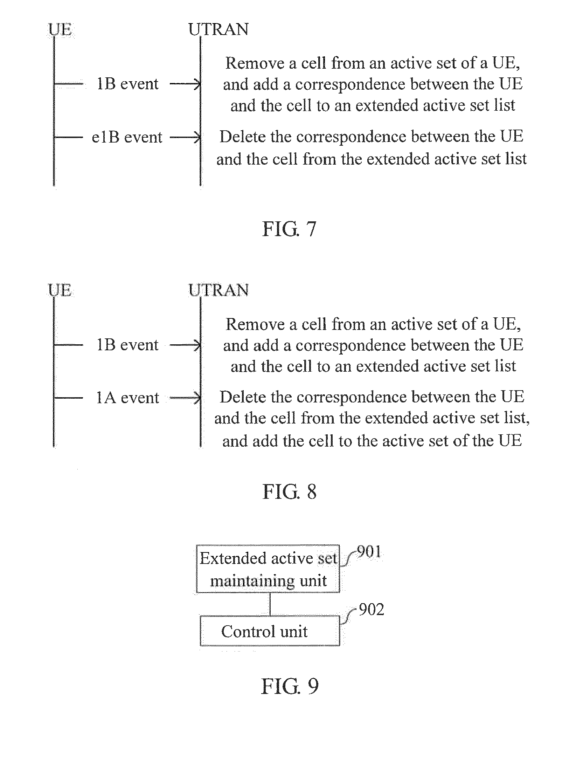

FIG. 7 shows scenario four of a list change in still another embodiment of the method for controlling the signal contact between the user equipment and the cell according to the present invention. As shown in FIG. 7, after the 1B event shown in FIG. 6 occurs, that is, after the cell is removed from the active set of the UE and the correspondence between the UE and the cell is added to the extended active set, if the UTRAN further receives the e1B event sent by the UE, it indicates that the UE cannot detect the cell, and the UTRAN needs to delete the correspondence between the UE and the cell from the extended active set.

FIG. 8 shows scenario five of a list change in still another embodiment of the method for controlling the signal contact between the user equipment and the cell according to the present invention. As shown in FIG. 8, after the 1B event shown in FIG. 6 occurs, that is, after the cell is removed from the active set of the UE and the correspondence between the UE and the cell is added to the extended active set, if the UTRAN further receives the 1A event sent by the UE, the UTRAN adds the cell to the active set of the UE according to the 1A event and deletes the correspondence between the UE and the cell from the extended active set, and it is considered that the UE cannot detect the cell.

In addition, there are multiple recording manners for the RNC to record the extended active set, and no matter which recording manner is used, the RNC is enabled to know, for a UE, cells that are added to an extended active set area of the UE (a cell in this area is detected by the UE but has not been added to the active set of the UE), and the RNC can know a correspondence between the UE and the cell, where the correspondence is equivalent to an interference relationship, that is, which UEs interfere with which cells, and which cells encounters interference from which UEs. The following lists three optional extended active set recording manners:

A recording manner is:

recording in a manner of a table that is in a matrix format, where any table cell element in the table corresponds to one UE and one cell separately, and the table cell element represents, by using a preset identifier, that the UE corresponds to the cell. Refer to the following table 1:

**Table 1 Extended active set**

|  | Cell 1 | Cell 2 | Cell 3 | Cell 4 |
|---|---|---|---|---|
| UE1 | 0 | 1 | 0 | 1 |
| UE2 | 0 | 1 | 0 | 0 |
| UE3 | 0 | 0 | 0 | 0 |

Using table 1 as an example, a table cell in which "0" or "1" in table 1 is located is called a "table cell element", where each table cell element corresponds to one UE and one cell separately. For example, the table cell element with twill shading in table 1 corresponds to UE1 and cell 2 separately. The table cell element represents, by using a preset identifier, that the UE corresponds to the cell. For example, a preset identifier of the table cell element with twill shading is "1 ", and the "1" is used to indicate that UE1 and cell 2 are in a correspondence, where the correspondence is that UE1 detects cell 2 and cell 2 has not been added to an active set of UE1. In this embodiment, a preset identifier "0" in a table cell element is used to indicate that a UE and a cell are not in a correspondence, that is, the UE does not detect the cell. For example, UE2 detects cell 2, but UE3 does not detect any cell.

Another recording manner is that:

the RNC records a UE set, and each UE in the set records all cells that are detected by the UE but have not been added to an active set of the UE, where the number of cells is at least one, that is, each UE is in a correspondence with at least one cell. For example, according to the relationships shown in table 1, the following correspondences can be obtained, where the symbol "->" represents that a UE and a cell locate at two sides of this symbol are in a correspondence:

$$UE1\text{->}\{\text{cell 2, cell 4}\}$$

$$UE2\text{->}\{\text{cell 2}\}$$

Still another recording manner is that:

the RNC records a cell set, and each cell in the set records all UEs that detect the cell but to whose active set the cell has not been added, where the number of UEs is at least one, that is, each cell is in a correspondence with at least one UE. For example, according to the relationships shown in table 1, the following correspondences can be obtained, where the symbol "->" represents that a UE and a cell locate at two sides of this symbol are in a correspondence:

$$\text{Cell 2->}\{UE1, UE2\}$$

$$\text{Cell 4->}\{UE1\}$$

304: The RNC determines whether the cell encounters interference.

The determining whether the cell encounters interference in this embodiment actually refers to determining whether the interference encountered by the cell is too large. The RNC may use interference strength and scheduling information (the interference strength may also be obtained by using the scheduling information) reported by a cell to determine whether current interference of the cell is too large. For example, an interference strength threshold may be set, and if the interference strength exceeds the threshold, it indicates that the interference is too large.

If the current interference of the cell is too large, that is, a result of the determining in 304 is yes, 305 is executed subsequently; otherwise, it indicates that interference from the UE to the cell is relatively small, and there is no need to control the interference to the cell, and a process of this embodiment ends.

305: When learning that a target cell in the cell encounters interference, the RNC queries the extended active set to obtain a user equipment corresponding to the target cell.

The target cell is a cell, determined by the RNC, that encounters interference from the UE, and the target cell in the cell refers to that there is a record of the target cell in the extended active set of the RNC. The RNC can find, according to the extended active set stored, for example, in the recording manner in table 1, by the RNC, the UE corresponding to the target cell that encounters interference.

For example, assume that the target cell that encounters interference is cell 2, it can be obtained, by using table 1, that UEs corresponding to cell 2 includes UE1 and UE2.

306: The RNC controls interference from the UE to the target cell.

The extended active set recorded at an RNC side records only the correspondence between the UE and the cell, which indicates that interference to the cell may be caused by the UE. However, the cell in the extended active set is a cell that has not been added to the active set of the UE, and the cell itself cannot control transmit power of the UE; therefore, the RNC controls the interference from the UE to the cell.

In this embodiment, a manner for the RNC to control the interference from the UE to the target cell may include the following two optional interference control manners:

For example, the RNC sends, to the UE, control signaling that is used to instruct to reduce transmit power, so that the UE reduces the transmit power of the UE itself according to the control signaling, thereby reducing interference to the target cell. In specific implementation, reducing the transmit power of the UE may also be reducing a scheduling grant value of the UE. Because a larger scheduling grant value of the UE indicates larger transmit power of the UE, if the scheduling grant value of the UE is reduced, a function of reducing the transmit power of the UE is also achieved.

For another example, the RNC may also send scrambling code information of the UE to the target cell, and the target cell performs interference clearance by itself according to the scrambling code information, thereby reducing the interference from the UE. Specifically, the target cell can obtain, by demodulation according to the scrambling code information, a signal sent by the UE, and eliminate the signal of the UE from a signal received by the target cell, thereby clearing the interference from the UE to the target cell. For example, the RNC may periodically send, to a cell according to an established correspondence, scrambling code information of a UE corresponding to the cell, and may also send scrambling code information after learning that interference to a cell is too large.

Further, the foregoing embodiments of the present invention are all used to describe how to control, according to an extended active set, interference from a UE to a cell, where this kind of interference is uplink interference from the UE to the cell. In specific implementation, the extended active set may further be used to enhance downlink performance of the UE.

For the following example: assume that there is a communication connection between the UE and a Micro, where the Micro is a cell that has already been added to an active set of the UE. However, if at present, only the Micro is used to communicate with the UE, a communication requirement of the UE cannot be met, and a cell that can communicate with the UE needs to be added. In this case, a cell that is detected by the UE, that is, a cell with which the UE has a correspondence, can be found according to the extended active set, and a communication connection between the cell and the UE is established, so that the cell assists the Micro in communicating with the UE, thereby enhancing the downlink performance of the UE.

It should be noted that, this embodiment of the present invention uses interference suppression in a Hetnet scenario as an example to describe a method for controlling signal contact between a user equipment and a cell. In specific implementation, the method may also be applied to uplink/downlink interference suppression of a Homonet, and to LTE networking or another networking application of a homogeneous or heterogeneous type.

Embodiment 4

FIG. 9 is a schematic structural diagram of an embodiment of a radio network controller RNC according to the present invention, where the RNC may execute the method of any embodiment of the present invention. As shown in FIG. 9, the RNC includes: extended active set maintaining unit 901 and a control unit 902, where

the extended active set maintaining unit 901 is configured to: receive a measurement reporting event sent by a user equipment, and record an extended active set according to the measurement reporting event, where the extended active set is used to store a correspondence between the user equipment and a cell, and the cell is a cell that is detected by the user equipment but has not been added to an active set of the user equipment; and

the control unit 902 is configured to control signal contact between the user equipment and the cell according to the correspondence in the extended active set.

Further, the measurement reporting event includes: an indication that the cell is to be added to the active set, an indication that the cell is to be removed from the active set, an indication that the cell is to be added to the extended active set, and an indication that the cell is to be removed from the extended active set; and

the extended active set maintaining unit 901 is specifically configured to add the correspondence between the user equipment and the cell to or delete the correspondence between the user equipment and the cell from the extended active set according to any one item or a combination of at least any two items in the measurement reporting event.

Further, the extended active set maintaining unit 901 is specifically configured to, when the indication, sent by the user equipment, that the cell is to be added to the extended active set is received, add the correspondence between the user equipment and the cell to the extended active set; and is further configured to, when the indication, sent by the user equipment, that the cell is to be removed from the extended active set is received after the indication that the cell is to be added to the extended active set is received, delete the correspondence between the user equipment and the cell from the extended active set.

Further, the extended active set maintaining unit 901 is specifically configured to, when the indication, sent by the user equipment, that the cell is to be added to the active set is further received after the indication that the cell is to be added to the extended active set is received, delete the correspondence between the user equipment and the cell from the extended active set.

Further, the extended active set maintaining unit 901 is specifically configured to, when the indication, sent by the user equipment, that the cell is to be removed from the active set is received, add the correspondence between the user equipment and the cell to the extended active set; and is further configured to, when the indication, sent by the user equipment, that the cell is to be added to the active set is further received after the indication that the cell is to be removed from the active set is received, delete the correspondence between the user equipment and the cell from the extended active set.

Further, the extended active set maintaining unit 901 is specifically configured to record in a manner of a table that is in a matrix format, where any table cell element in the table corresponds to the user equipment and the cell separately, and the table cell element represents, by using a preset identifier, that the user equipment corresponds to the cell; or separately record a correspondence between each user equipment and at least one cell, where all the at least one cell correspond/corresponds to the user equipment; or separately record a correspondence between each cell and at least one user equipment, where all the at least one user equipment correspond/corresponds to the cell.

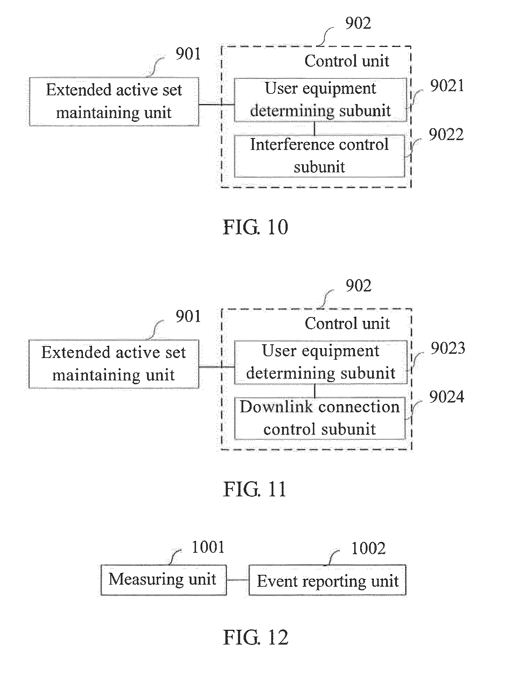

Further, FIG. 10 is a schematic structural diagram of another embodiment of a radio network controller RNC according to the present invention. On a basis of the structure shown in FIG. 9, the control unit 902 includes: a user equipment determining subunit 9021 and an interference control subunit 9022; where

the user equipment determining subunit 9021 is configured to, when it is learned that a target cell in the cell encounters interference, query the extended active set to obtain a user equipment corresponding to the target cell; and

the interference control subunit 9022 is configured to control interference from the user equipment to the target cell.

Further, the interference control subunit 9022 is specifically configured to send, to the user equipment, control signaling that is used to instruct to reduce transmit power, so that the user equipment reduces the transmit power of the user equipment according to the control signaling; or is specifically configured to send scrambling code information of the user equipment to the target cell, so that the target cell reduces the interference from the user equipment according to the scrambling code information.

Further, FIG. 11 is a schematic structural diagram of still another embodiment of a radio network controller RNC according to the present invention. On a basis of the structure shown in FIG. 9, the control unit 902 includes: a user equipment determining subunit 9023 and an interference control subunit 9024; where

the user equipment determining subunit 9023 is configured to query the extended active set, to obtain the cell and the user equipment that are in the correspondence; and

the downlink connection control subunit 9024 is configured to establish a communication connection between the cell and the user equipment according to the correspondence.

**Embodiment 5**

FIG. 12 is a schematic structural diagram of an embodiment of a user equipment according to the present invention, where the user equipment may execute the method of any embodiment of the present invention. As shown in FIG. 12, the user equipment includes: a measuring unit 1001 and an event reporting unit 1002, where

the measuring unit 1001 is configured to measure measurement values of a primary common pilot channel P-CPICH and a secondary channel of a cell, where the cell is a cell that has not been added to an active set of the user equipment; and

the event reporting unit 1002 is configured to: when the measurement values meet a preset threshold condition, send a measurement reporting event to a radio network controller, so that the radio network controller records an extended active set according to the measurement reporting event; and control interference from the user equipment to a target cell in the cell according to the extended active set.

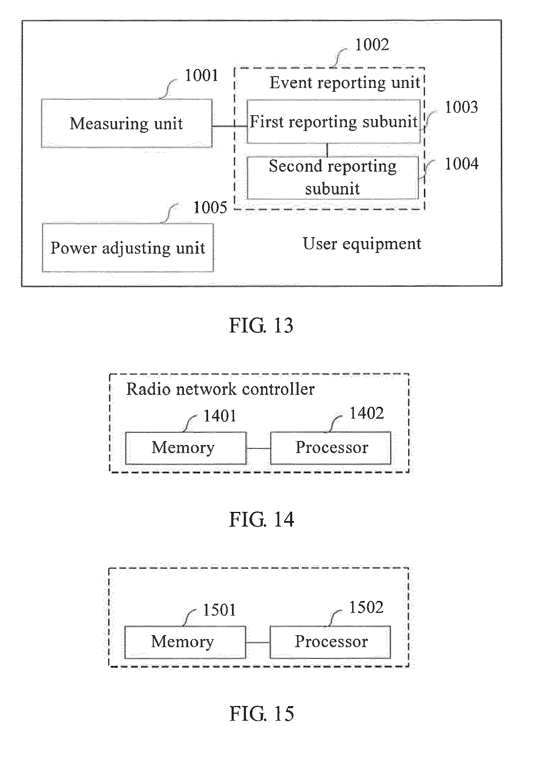

FIG. 13 is a schematic structural diagram of another embodiment of a user equipment according to the present invention. As shown in FIG. 13, on a basis of the structure shown in FIG. 12, the event reporting unit 1002 in the user equipment includes: a first reporting subunit 1003 and a second reporting subunit 1004, where

the first reporting subunit 1003 is configured to, when the measurement values meet a preset threshold condition corresponding to an event of an indication that the cell is to be added to the extended active set, which indicates that the cell is detected by the user equipment, send, by the user equipment, a measurement reporting event to the radio network controller, where the measurement reporting event is the indication that the cell is to be added to the extended active set, so that the radio network controller adds a correspondence between the user equipment and the cell to the extended active set according to the measurement reporting event; and

the second reporting subunit 1004 is configured to, when the measurement values meet a preset threshold condition corresponding to an event of an indication that the cell is to be removed from the extended active set, which indicates that the cell is not detected by the user equipment, send, by the user equipment, a measurement reporting event to the radio network controller, where the measurement reporting event is the indication that the cell is to be removed from the extended active set, so that the radio network controller deletes the correspondence between the user equipment and the cell from the extended active set according to the measurement reporting event.

Further, the user equipment may further includes: a power adjusting unit 1005, configured to receive control signaling sent by the network controller and reduce transmit power of the user equipment according to the control signaling.

**Embodiment 6**

FIG. 14 is a schematic structural diagram of an entity of an embodiment of a radio network controller according to the present invention, where the radio network controller may execute the method of any embodiment of the present invention. As shown in FIG. 14, the radio network controller includes: a memory 1401 and a processor 1402, where

the memory 1401 is configured to store an extended active set, where the extended active set is used to store a correspondence between a user equipment and a cell, and the cell is a cell that is detected by the user equipment but has not been added to an active set of the user equipment; and

the processor 1402 is configured to receive a measurement reporting event sent by the user equipment, and record the extended active set according to the measurement reporting event; and is configured to control signal contact between the user equipment and the cell according to the correspondence in the extended active set.

Further, the measurement reporting event includes: an indication that the cell is to be added to the active set, an indication that the cell is to be removed from the active set, an indication that the cell is to be added to the extended active set, and an indication that the cell is to be removed from the extended active set.

Further, the processor 1402 is specifically configured to add the correspondence between the user equipment and the cell to or delete the correspondence between the user equipment and the cell from the extended active set according to any one item or a combination of at least any two items in the measurement reporting event.

Further, the processor 1402 is specifically configured to, when the indication, sent by the user equipment, that the cell is to be added to the extended active set is received, add the correspondence between the user equipment and the cell to the extended active set; and is further configured to, when the indication, sent by the user equipment, that the cell is to be removed from the extended active set is received after the indication that the cell is to be added to the extended active set is received, delete the correspondence between the user equipment and the cell from the extended active set.

Further, the processor 1402 is specifically configured to, when the indication, sent by the user equipment, that the cell is to be added to the active set is further received after the indication that the cell is to be added to the extended active set is received, delete the correspondence between the user equipment and the cell from the extended active set.

Further, the processor 1402 is specifically configured to, when the indication, sent by the user equipment, that the cell is to be removed from the active set is received, add the correspondence between the user equipment and the cell to the extended active set; and is further configured to, when the indication, sent by the user equipment, that the cell is to be added to the active set is further received after the indication that the cell is to be removed from the active set is received, delete the correspondence between the user equipment and the cell from the extended active set.

Further, the processor 1402 is specifically configured to record in a manner of a table that is in a matrix format, where any table cell element in the table corresponds to the user equipment and the cell separately, and the table cell element represents, by using a preset identifier, that the user equipment corresponds to the cell; or separately record a correspondence between each user equipment and at least one cell, where all the at least one cell correspond/corresponds to the user equipment; or separately record a correspondence between each cell and at least one user equipment, where all the at least one user equipment correspond/corresponds to the cell.

Further, the processor 1402 is further configured to: when it is learned that a target cell in the cell encounters interference, query the extended active set to obtain a user equipment corresponding to the target cell; and control interference from the user equipment to the target cell.

Further, the processor 1402 is specifically configured to send, to the user equipment, control signaling that is used to instruct to reduce transmit power, so that the user equipment reduces the transmit power of the user equipment according to the control signaling.

FIG. 15 is a schematic structural diagram of an entity of an embodiment of a user equipment according to the present invention, where the user equipment may execute the method of any embodiment of the present invention. As shown in FIG. 15, the user equipment includes: a memory 1501 and a processor 1502, where

the memory 1501 is configured to store measurement values, which are obtained through measurement, of a primary common pilot channel P-CPICH and a secondary channel of a cell, where the cell is a cell that has not been added to an active set of the user equipment; and

the process 1502 is configured to: send a measurement reporting event to a radio network controller when the measurement values meet a preset threshold condition, so that the radio network controller records an extended active set according to the measurement reporting event; and control signal contact between the user equipment and the cell according to the extended active set.

Further, the processor 1502 is specifically configured to, when the measurement values meet a preset threshold condition corresponding to an event of an indication that the cell is to be added to the extended active set, which indicates that the cell is detected by the user equipment, send, by the user equipment, a measurement reporting event to the radio network controller, where the measurement reporting event is the indication that the cell is to be added to the extended active set, so that the radio network controller adds a correspondence between the user equipment and the cell to the extended active set according to the measurement reporting event; and

the processor 1502 is configured to, when the measurement values meet a preset threshold condition corresponding to an event of an indication that the cell is to be removed from the extended active set, which indicates that the cell is not detected by the user equipment, send, by the user equipment, a measurement reporting event to the radio network controller, where the measurement reporting event is the indication that the cell is to be removed from the extended active set, so that the radio network controller deletes the correspondence between the user equipment and the cell from the extended active set according to the measurement reporting event.

The embodiments of the present invention further provides a system for controlling signal contact between a user equipment and a cell, where the system includes the radio network controller in any embodiment of the present invention and the user equipment in any embodiment of the present invention. For details about the structures of the radio network controller and the user equipment and how the system controls signal contact between a user equipment and a cell, reference may be made to descriptions in any method embodiment and apparatus embodiment of the present invention.

Persons of ordinary skill in the art may understand that all or a part of the steps of the method embodiments may be implemented by a program instructing relevant hardware. The program may be stored in a computer-readable storage medium. When the program runs, the steps of the method embodiments are performed. The foregoing storage medium includes: any medium that can store program code, such as a ROM, a RAM, a magnetic disk, or an optical disc.

Finally, it should be noted that the foregoing embodiments are merely intended for describing the technical solutions of the present invention, but not for limiting the present invention. Although the present invention is described in detail with reference to the foregoing embodiments, persons of ordinary skill in the art should understand that they may still make modifications to the technical solutions described in the foregoing embodiments or make equivalent replacements to some or all technical features thereof, without departing from the scope of the technical solutions of the embodiments of the present invention.

**Claims**

1.  A method for controlling signal contact between a user equipment and a cell, comprising:

    receiving a measurement reporting event sent by the user equipment;
    recording an extended active set according to the measurement reporting event, wherein the extended active set is used to store a correspondence between the user equipment and the cell, and the cell is a cell that is detected by the user equipment but has not been added to an active set of the user equipment; and
    controlling the signal contact between the user equipment and the cell according to the correspondence in the extended active set.

2.  The method for controlling signal contact between a user equipment and a cell according to claim 1, wherein the measurement reporting event comprises: an indication that the cell is to be added to the active set, an indication that the cell is to be removed from the active set, an indication that the cell is to be added to the extended active set, and an indication that the cell is to be removed from the extended active set.

3.  The method for controlling signal contact between a user equipment and a cell according to claim 2, wherein the indication that the cell is to be added to the extended active set or the indication that the cell is to be removed from the extended active set is sent by the user equipment when the user equipment measures measurement values of a primary common pilot channel P-CPICH and a secondary channel of the cell and when the measurement values meet a preset threshold condition.

4.  The method for controlling signal contact between a user equipment and a cell according to claim 2, wherein the recording an extended active set according to the measurement reporting event comprises: adding the correspondence between the user equipment and the cell to or deleting the correspondence between the user equipment and the cell from the extended active set according to any one measurement reporting event or a combination of at least any two measurement reporting events.

5.  The method for controlling signal contact between a user equipment and a cell according to claim 4, wherein the adding the correspondence between the user equipment and the cell to or deleting the correspondence between the user equipment and the cell from the extended active set according to any one measurement reporting event or a combination of at least any two measurement reporting events comprises:

    if the indication, sent by the user equipment, that the cell is to be added to the extended active set is received, adding the correspondence between the user equipment and the cell to the extended active set; and
    if the indication, sent by the user equipment, that the cell is to be removed from the extended active set is further received after the indication that the cell is to be added to the extended active set is received, deleting the correspondence between the user equipment and the cell from the extended active set.

6.  The method for controlling signal contact between a user equipment and a cell according to claim 5, after the indication that the cell is to be added to the extended active set is received, further comprising:

if the indication, sent by the user equipment, that the cell is to be added to the active set is received, deleting the correspondence between the user equipment and the cell from the extended active set.

7. The method for controlling signal contact between a user equipment and a cell according to claim 4, wherein the adding the correspondence between the user equipment and the cell to or deleting the correspondence between the user equipment and the cell from the extended active set according to any one measurement reporting event or a combination of at least any two measurement reporting events comprises:

if the indication, sent by the user equipment, that the cell is to be removed from the active set is received, adding the correspondence between the user equipment and the cell to the extended active set; and
if the indication, sent by the user equipment, that the cell is to be added to the active set is further received after the indication that the cell is to be removed from the active set is received, deleting the correspondence between the user equipment and the cell from the extended active set.

8. The method for controlling signal contact between a user equipment and a cell according to any one of claims 1 to 7, wherein the recording an extended active set comprises:

recording in a manner of a table that is in a matrix format, wherein any table cell element in the table corresponds to the user equipment and the cell separately, and the table cell element represents, by using a preset identifier, that the user equipment corresponds to the cell; or
separately recording a correspondence between each user equipment and at least one cell, wherein the at least one cell corresponds to the user equipment; or
separately recording a correspondence between each cell and at least one user equipment, wherein the at least one user equipment corresponds to the cell.

9. The method for controlling signal contact between a user equipment and a cell according to any one of claims 1 to 8, wherein the controlling the signal contact between the user equipment and the cell comprises:

when it is learned that a target cell encounters interference, querying the extended active set to obtain a user equipment corresponding to the target cell; and
controlling interference from the user equipment to the target cell.

10. The method for controlling signal contact between a user equipment and a cell according to claim 9, wherein the controlling interference from the user equipment to the target cell comprises:

sending, to the user equipment, control signaling that is used to reduce transmit power of the user equipment, so that the user equipment reduces the transmit power of the user equipment according to the control signaling.

11. The method for controlling signal contact between a user equipment and a cell according to any one of claims 1 to 8, wherein the controlling the signal contact between the user equipment and the cell comprises:

establishing a communication connection between the cell and the user equipment according to the extended active set.

12. A method for controlling signal contact between a user equipment and a cell, comprising:

measuring, by the user equipment, measurement values of a primary common pilot channel P-CPICH and a secondary channel of the cell, wherein the cell is a cell that has not been added to an active set of the user equipment; and
sending, by the user equipment when the measurement values meet a preset threshold condition, a measurement reporting event to a radio network controller, so that the radio network controller records an extended active set according to the measurement reporting event, wherein the extended active set is used to store a correspondence between the user equipment and the cell, and the cell is a cell that is detected by the user equipment but has not been added to the active set of the user equipment; and controlling the signal contact between the user equipment and the cell according to the correspondence in the extended active set.

13. The method for controlling signal contact between a user equipment and a cell according to claim 12, wherein the sending, by the user equipment when the measurement values meet a preset threshold condition, a measurement reporting event to a radio network controller, so that the radio network controller records an extended active set according to the measurement reporting event comprises:

when the measurement values meet a preset threshold condition corresponding to an event of an indication that the cell is to be added to the extended active set, which indicates that the cell is detected by the user equipment, sending, by the user equipment, a measurement reporting event to the radio network controller, wherein the measurement reporting event is the indication that the cell is to be added to the extended active set, so that the radio network controller adds the correspondence between the user equipment and the cell to the extended active set according to the measurement reporting event; and

when the measurement values meet a preset threshold condition corresponding to an event of an indication that the cell is to be removed from the extended active set, which indicates that the cell is not detected by the user equipment, sending, by the user equipment, a measurement reporting event to the radio network controller, wherein the measurement reporting event is the indication that the cell is to be removed from the extended active set, so that the radio network controller deletes the correspondence between the user equipment and the cell from the extended active set according to the measurement reporting event.

14. The method for controlling signal contact between a user equipment and a cell according to claim 12 or 13, wherein the secondary channel comprises at least one of a synchronization channel, a secondary pilot channel, and an additional pilot channel.

15. The method for controlling signal contact between a user equipment and a cell according to any one of claims 12 to 14, wherein the measurement values comprise: a path loss, received signal code power RSCP, or received signal code power/total received power Ec/No.

16. The method for controlling signal contact between a user equipment and a cell according to any one of claims 12 to 15, after the sending a measurement reporting event to the radio network controller, further comprising:

receiving, by the user equipment, control signaling sent by the radio network controller, and reducing its own transmit power according to the control signaling.

17. A radio network controller, comprising:

an extended active set maintaining unit, configured to: receive a measurement reporting event sent by a user equipment, and record an extended active set according to the measurement reporting event, wherein the extended active set is used to store a correspondence between the user equipment and a cell, and the cell is a cell that is detected by the user equipment but has not been added to an active set of the user equipment; and a control unit, configured to control signal contact between the user equipment and the cell according to the correspondence in the extended active set.

18. The radio network controller according to claim 17, wherein the measurement reporting event comprises: an indication that the cell is to be added to the active set, an indication that the cell is to be removed from the active set, an indication that the cell is to be added to the extended active set, and an indication that the cell is to be removed from the extended active set.

19. The radio network controller according to claim 18, wherein
the extended active set maintaining unit is specifically configured to add the correspondence between the user equipment and the cell to or delete the correspondence between the user equipment and the cell from the extended active set according to any one measurement reporting event or a combination of at least any two measurement reporting events.

20. The radio network controller according to claim 19, wherein
the extended active set maintaining unit is specifically configured to, when the indication, sent by the user equipment, that the cell is to be added to the extended active set is received, add the correspondence between the user equipment and the cell to the extended active set; and
the extended active set maintaining unit is further configured to, when the indication, sent by the user equipment, that the cell is to be removed from the extended active set is received after the indication that the cell is to be added to the extended active set is received, delete the correspondence between the user equipment and the cell from the extended active set.

21. The radio network controller according to claim 19, wherein
the extended active set maintaining unit is specifically configured to, when the indication, sent by the user equipment, that the cell is to be added to the active set is further received after the indication that the cell is to be added to the extended active set is received, delete the correspondence between the user equipment and the cell from the extended active set.

22. The radio network controller according to claim 19, wherein
the extended active set maintaining unit is specifically configured to, when the indication, sent by the user equipment, that the cell is to be removed from the active set is received, add the correspondence between the user equipment and the cell to the extended active set; and
the extended active set maintaining unit is further configured to, when the indication, sent by the user equipment, that the cell is to be added to the active set is further received after the indication that the cell is to be removed from the active set is received, delete the correspondence between the user equipment and the cell from the extended active set.

23. The radio network controller according to claim 19, wherein
the extended active set maintaining unit is specifically configured to record in a manner of a table that is in a matrix format, wherein any table cell element in the table corresponds to the user equipment and the cell separately, and the table cell element represents, by using a preset identifier, that the user equipment corresponds to the cell; or
separately record a correspondence between each user equipment and at least one cell, wherein all the at least one cell correspond/corresponds to the user equipment; or
separately recording a correspondence between each cell and at least one user equipment, wherein all the at least one user equipment correspond/corresponds to the cell.

24. The radio network controller according to any one of claims 17 to 23, wherein the control unit comprises:

   a user equipment determining subunit, configured to, when it is learned that a target cell in the cell encounters interference, query the extended active set to obtain a user equipment corresponding to the target cell; and
   an interference control subunit, configured to control interference from the user equipment to the target cell.

25. The radio network controller according to claim 24, wherein
the interference control subunit is specifically configured to send, to the user equipment, control signaling that is used to instruct to reduce transmit power, so that the user equipment reduces the transmit power of the user equipment according to the control signaling.

26. The radio network controller according to any one of claims 17 to 23, wherein the control unit comprises:

   a user equipment determining subunit, configured to query the extended active set to obtain the cell and the user equipment that are in the correspondence; and
   a downlink connection control subunit, configured to establish a communication connection between the cell and the user equipment according to the correspondence.

27. A user equipment, comprising:

   a measuring unit, configured to measure measurement values of a primary common pilot channel P-CPICH and a secondary channel of a cell, wherein the cell is a cell that has not been added to an active set of the user equipment; and
   an event reporting unit, configured to: send a measurement reporting event to a radio network controller when the measurement values meet a preset threshold condition, so that the radio network controller records an extended active set according to the measurement reporting event; and control signal contact between the user equipment and the cell according to the extended active set.

28. The user equipment according to claim 27, wherein the event report unit comprises:

   a first reporting subunit, configured to, when the measurement values meet a preset threshold condition corresponding to an event of an indication that the cell is to be added to the extended active set, which indicates that the cell is detected by the user equipment, send, by the user equipment, a measurement reporting event to the radio network controller, wherein the measurement reporting event is the indication that the cell is to be added to the extended active set, so that the radio network controller adds a correspondence between the user equipment and the cell to the extended active set according to the measurement reporting event; and

a second reporting subunit, configured to, when the measurement values meet a preset threshold condition corresponding to an event of an indication that the cell is to be removed from the extended active set, which indicates that the cell is not detected by the user equipment, send, by the user equipment, a measurement reporting event to the radio network controller, wherein the measurement reporting event is the indication that the cell is to be removed from the extended active set, so that the radio network controller deletes the correspondence between the user equipment and the cell from the extended active set according to the measurement reporting event.

29. A radio network controller, comprising: a memory and a processor, wherein
the memory is configured to store an extended active set, wherein the extended active set is used to store a correspondence between the user equipment and a cell, and the cell is a cell that is detected by the user equipment but has not been added to an active set of the user equipment; and
the processor is configured to: receive a measurement reporting event sent by the user equipment, and record the extended active set according to the measurement reporting event; and is configured to control signal contact between the user equipment and the cell according to the correspondence in the extended active set.

30. The radio network controller according to claim 29, wherein the measurement reporting event comprises: an indication that the cell is to be added to the active set, an indication that the cell is to be removed from the active set, an indication that the cell is to be added to the extended active set, and an indication that the cell is to be removed from the extended active set.

31. The radio network controller according to claim 30, wherein
the processor is specifically configured to add the correspondence between the user equipment and the cell to or delete the correspondence between the user equipment and the cell from the extended active set according to any one item or a combination of at least any two items in the measurement reporting event.

32. The radio network controller according to claim 31, wherein
the processor is specifically configured to, when the indication, sent by the user equipment, that the cell is to be added to the extended active set is received, add the correspondence between the user equipment and the cell to the extended active set; and is further configured to, when the indication, sent by the user equipment, that the cell is to be removed from the extended active set is received after the indication that the cell is to be added to the extended active set is received, delete the correspondence between the user equipment and the cell from the extended active set.

33. The radio network controller according to claim 31, wherein
the processor is specifically configured to, when the indication, sent by the user equipment, that the cell is to be added to the active set is further received after the indication that the cell is to be added to the extended active set is received, delete the correspondence between the user equipment and the cell from the extended active set.

34. The radio network controller according to claim 31, wherein
the processor is specifically configured to, when the indication, sent by the user equipment, that the cell is to be removed from the active set is received, add the correspondence between the user equipment and the cell to the extended active set; and is further configured to, when the indication, sent by the user equipment, that the cell is to be added to the active set is further received after the indication that the cell is to be removed from the active set is received, delete the correspondence between the user equipment and the cell from the extended active set.

35. The radio network controller according to claim 31, wherein
the processor is specifically configured to record in a manner of a table that is in a matrix format, wherein any table cell element in the table corresponds to the user equipment and the cell separately, and the table cell element represents, by using a preset identifier, that the user equipment corresponds to the cell; or separately record a correspondence between each user equipment and at least one cell, wherein all the at least one cell correspond/corresponds to the user equipment; or separately record a correspondence between each cell and at least one user equipment, wherein all the at least one user equipment correspond/corresponds to the cell.

36. The radio network controller according to any one of claims 29 to 35, wherein
the processor is configured to: when it is learned that a target cell in the cell encounters interference, query the extended active set to obtain a user equipment corresponding to the target cell; and control interference from the user equipment to the target cell.

37. The radio network controller according to claim 36, wherein
the processor is specifically configured to send, to the user equipment, control signaling that is used to instruct to reduce transmit power, so that the user equipment reduces the transmit power of the user equipment according to the control signaling.

38. A user equipment, comprising: a memory and a processor, wherein
the memory is configured to store measurement values, which are obtained through measurement, of a primary common pilot channel P-CPICH and a secondary channel of a cell, wherein the cell is a cell that has not been added to an active set of the user equipment; and
the processor is configured to: send a measurement reporting event to a radio network controller when the measurement values meet a preset threshold condition, so that the radio network controller records an extended active set according to the measurement reporting event; and control signal contact between the user equipment and the cell according to the extended active set.

39. The user equipment according to claim 38, wherein
the processor is configured to, when the measurement values meet a preset threshold condition corresponding to an event of an indication that the cell is to be added to the extended active set, which indicates that the cell is detected by the user equipment, send, by the user equipment, a measurement reporting event to the radio network controller, wherein the measurement reporting event is the indication that the cell is to be added to the extended active set, so that the radio network controller adds a correspondence between the user equipment and the cell to the extended active set according to the measurement reporting event; and
the processor is configured to, when the measurement values meet a preset threshold condition corresponding to an event of an indication that the cell is to be removed from the extended active set, which indicates that the cell is not detected by the user equipment, send, by the user equipment, a measurement reporting event to the radio network controller, wherein the measurement reporting event is the indication that the cell is to be removed from the extended active set, so that the radio network controller deletes the correspondence between the user equipment and the cell from the extended active set according to the measurement reporting event.

Receive a measurement reporting event sent by a user equipment — 101

Record an extended active set according to the measurement reporting event — 102

Control signal contact between the user equipment and a cell according to a correspondence in the extended active set — 103

FIG. 1

A UE measures measurement values of a P-CPICH and an secondary channel of a cell, where the cell is a cell that has not been added to an active set of the user equipment — 201

When the measurement values meet a preset threshold condition, the UE sends a measurement reporting event to an RNC, so that the RNC records an extended active set according to the measurement reporting event — 202

FIG. 2

A UE measures a measurement value of a cell channel — 301

When the measurement value meets a preset threshold condition, the UE sends a measurement reporting event to an RNC — 302

The RNC records an extended active set according to the measurement reporting event — 303

304

The RNC determines whether the cell encounters interference

No → End

Yes

When learning that a target cell in the cell encounters interference, the RNC queries the extended active set to obtain a UE corresponding to the target cell — 305

The RNC controls interference from the UE to the target cell — 306

FIG. 3

UE          UTRAN

——— e1A event ———→    Add a correspondence between a UE and a cell to an extended active set list

——— e1B event ———→    Delete the correspondence between the UE and the cell from the extended active set list

FIG. 4

EP 2 905 987 A1

UE　　　　　　　UTRAN

├── e1A event ──→│　Add a correspondence between a UE
　　　　　　　　　│　and a cell to an extended active set list

├── 1A event ──→│　Delete the correspondence between the UE
　　　　　　　　　│　and the cell from the extended active set list

FIG. 5

UE　　　　　　　UTRAN

├── 1A event ──→│　　Add a cell to an active set of a UE

│　　　　　　　　│　Remove the cell from the active set of the UE,
├── 1B event ──→│　and add a correspondence between the UE and
　　　　　　　　　│　　the cell to an extended active set list

FIG. 6

29

UE                    UTRAN

├──── 1B event ──→   Remove a cell from an active set of a UE,
                      and add a correspondence between the UE
                      and the cell to an extended active set list

├──── e1B event ──→  Delete the correspondence between the UE
                      and the cell from the extended active set list

FIG. 7

UE                    UTRAN

├──── 1B event ──→   Remove a cell from an active set of a UE,
                      and add a correspondence between the UE
                      and the cell to an extended active set list

├──── 1A event ──→   Delete the correspondence between the UE
                      and the cell from the extended active set list,
                      and add the cell to the active set of the UE

FIG. 8

| Extended active set maintaining unit | ⌐901 |
| Control unit | ⌐902 |

FIG. 9

901

Extended active set
maintaining unit

902

Control unit

9021

User equipment
determining subunit

9022

Interference control
subunit

FIG. 10

901

Extended active set
maintaining unit

902

Control unit

9023

User equipment
determining subunit

9024

Downlink connection
control subunit

FIG. 11

1001

Measuring unit

1002

Event reporting unit

FIG. 12

1002

1001

Event reporting unit

1003

Measuring unit ──── First reporting subunit

1004

Second reporting subunit

1005

Power adjusting unit

User equipment

FIG. 13

Radio network controller

1401

1402

Memory ──── Processor

FIG. 14

1501

1502

Memory ──── Processor

FIG. 15

# INTERNATIONAL SEARCH REPORT

| | International application No. |
|---|---|
| | **PCT/CN2012/083418** |

| **A.** | **CLASSIFICATION OF SUBJECT MATTER** |
|---|---|

H04W 24/10 (2009.01) i

According to International Patent Classification (IPC) or to both national classification and IPC

| **B.** | **FIELDS SEARCHED** |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS, CNTXT, CNKI: enhanced active set, active set, measurement, detection, dominant frequency, pilot frequency, carrier frequency, primary common pilot frequency, P-CPICH, add, delete, remove, update, maintain, auxiliary, extra, synchronization, detected set, monitor set, candidate set, interference

VEN, 3GPP: active set, add+, delet+, remov+, maintain+, updat+, monitor+ set, detect+ set, interfere, active group

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| X | CN 101790187 A (HUAWEI TECHNOLOGIES CO., LTD.), 28 July 2010 (28.07.2010), description, paragraphs [0004], [0043]-[0065], [0068]-[0082], [0084]-[0138], [0157]-[0158] and [0182]-[0185], and figures 2, 5, 17 and 18 | 1-39 |
| A | CN 101547486 A (HUAWEI TECHNOLOGIES CO., LTD.), 30 September 2009 (30.09.2009), the whole document | 1-39 |
| A | CN 101232663 A (HUAWEI TECHNOLOGIES CO., LTD.), 30 July 2008 (30.07.2008), the whole document | 1-39 |
| A | KR 20040029722 A (SAMSUNG ELECTRONICS CO., LTD.), 08 April 2004 (08.04.2004), the whole document | 1-39 |

☐ Further documents are listed in the continuation of Box C.  ☒ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 05 July 2013 (05.07.2013) | **25 July 2013 (25.07.2013)** |

| Name and mailing address of the ISA/CN: State Intellectual Property Office of the P. R. China No. 6, Xitucheng Road, Jimenqiao Haidian District, Beijing 100088, China Facsimile No.: (86-10) 62019451 | Authorized officer **YAO, Nan** Telephone No.: (86-10) **62411448** |
|---|---|

Form PCT/ISA/210 (second sheet) (July 2009)

## INTERNATIONAL SEARCH REPORT
### Information on patent family members

International application No.

**PCT/CN2012/083418**

| Patent Documents referred in the Report | Publication Date | Patent Family | Publication Date |
|---|---|---|---|
| CN 101790187 A | 28.07.2010 | CN 102301768 A | 28.12.2011 |
| | | WO 2010083774 A1 | 29.07.2010 |
| CN 101547486 A | 30.09.2009 | CN 101547486 B | 02.02.2011 |
| | | WO 2009117935 A1 | 01.10.2009 |
| CN 101232663 A | 30.07.2008 | None | |
| KR 20040029722 A | 08.04.2004 | None | |

Form PCT/ISA/210 (patent family annex) (July 2009)